# EUROPÄISCHE PATENTSCHRIFT

(11) **EP 2 323 837 B1**
(45) Veröffentlichungstag und Bekanntmachung des Hinweises auf die Patenterteilung: **04.05.2016**
(21) Anmeldenummer: 09776105.0
(22) Anmeldetag: 18.08.2009
(51) Int. Cl.: B29C 70/48, B32B 27/38, B32B 27/04, B32B 27/20, B32B 27/12, B29C 70/02, B29C 70/44, B32B 5/26, B32B 9/00, B32B 38/08, B32B 27/28, B32B 27/30, B32B 27/32, B32B 27/34, B32B 27/36, C08J 5/24, B29B 11/16, B29K 105/18

(54) **VERFAHREN ZUR HERSTELLUNG EINES FASERVERBUNDBAUTEILS**
METHOD FOR THE PRODUCTION OF A FIBER COMPOSITE COMPONENT
PROCÉDÉ DE FABRICATION D'UN ÉLÉMENT COMPOSITE À FIBRES

(30) Priorität: 18.08.2008 DE 102008038294
(43) Veröffentlichungstag der Anmeldung: 25.05.2011
(73) Patentinhaber: Airbus SAS, 31707 Blagnac Cedex (FR)
(72) Erfinder: LUINGE, Hans, 81545 München (DE); WACHINGER, Georg, 83026Rosenheim (DE)
(74) Vertreter: Marschall, Stefan
(86) Internationale Anmeldenummer: PCT/DE2009/001171
(87) Internationale Veröffentlichungsnummer: WO 2010/020237

(56) Entgegenhaltungen:
- EP-A1- 1 502 727
- WO-A1-2008/076244
- WO-A2-2009/014788
- DE-A1-102004 011 019
- DE-A1-102005 003 713

## Beschreibung

Die Erfindung betrifft ein Verfahren zur Herstellung eines Faserverbundbauteils, umfassend eine Injektion von Matrixmaterial in ein textiles Halbzeug (z. B. enthaltend ein Gewebe, Geflecht, Gelege etc.) und eine nachfolgende Aushärtung des infiltrierten Halbzeugs.

Faserverbundbauteile sind vor allem wegen ihrer hohen spezifischen Festigkeit (Verhältnis von Festigkeit zu Gewicht) in vielen Anwendungsbereichen interessant. Ein Faserverbundwerkstoff ist ein Mischwerkstoff, der im Allgemeinen aus zwei Hauptkomponenten besteht, nämlich einer Matrix und darin eingebetteten Fasern. Bei der Matrix handelt es sich in der Regel um ein thermisch aushärtbares Kunstharz, gegebenenfalls mit speziellen Zusätzen ("Harzsystem").

Für viele Anwendungsgebiete von Faserverbundbauteilen wären Eigenschaften bzw. Eigenschaftsverbesserungen wünschenswert, welche sich mit den gängigen Matrixmaterialien oftmals nicht oder nur unzureichend erzielen lassen. EP 1502727 A1 offenbart ein Verfahren gemäß dem Oberbegriff des Anspruchs 1. DE 10 2005 003 713 A1 offenbart ein Verfahren zur Herstellung eines Faserverbundbauteils, wobei eine Folie mit darin dispergierten Partikeln verwendet wird.

Es ist daher eine Aufgabe der vorliegenden Erfindung, einen Weg zur Verbesserung bestimmter Eigenschaften von Faserverbundbauteilen aufzuzeigen, um damit z. B. neue Anwendungsgebiete erschließen zu können.

Diese Aufgabe wird gemäß der Erfindung bei einem Verfahren gemäß dem Anspruch 1 gelöst.

Der Begriff "Mikropartikel" soll hierbei insbesondere Partikel mit einer mittleren Partikelgröße (z. B. Durchmesser) kleiner als 100 µm bezeichnen. Falls mindestens eine Dimension der Partikel kleiner als 100 nm ist, so spricht man üblicherweise von "Nanopartikeln".

In einer bevorzugten Ausführungsform liegt eine Verteilung von Partikeln mit einer mittleren Partikelgröße kleiner als 1 µm, insbesondere kleiner als 500 nm vor. Der mittlere gegenseitige Abstand zwischen den Partikeln kann etwa in der gleichen Größenordnung liegen, oder noch kleiner sein.

Es hat sich herausgestellt, dass abhängig von der Art und Anordnung der Partikel, bei weilchem es sich bevorzugt um anorganische Partikel handelt, eine nennenswerte Verbesserung der Gebrauchseigenschaften des fertigen Faserverbundbauteils erreicht werden können (z. B. verbesserter Brand- bzw. Flammschutz, erhöhte thermo-oxidative Stabilität, Impaktschutz, Medienresistenz etc.).

In einer besonders bevorzugten Ausführungsform sind die Partikel von einem Schichtsilikat gebildet.

Bei Schichtsilikaten, auch als Phyllosilikate bezeichnet, sind SiO₄-Tetraeder, welche die Grundeinheit aller Silikate bilden, in Schichten miteinander vernetzt. Als Schichtsilikate können im Rahmen der Erfindung grundsätzlich beliebige Schichtsilikate verwendet werden, wie z. B. Bentonit (bevorzugt, insbesondere mit quarternären Amiden), Halloysit, Hektorit, Illit, Kaolilinit, Montmorillonit, Polygorskit etc.

Ferner ist es bevorzugt, wenn die nanodispergierten Partikel eine plättchenförmige Gestalt besitzen und diese Plättchen in der Folie eine bevorzugte Ausrichtung parallel zur Folienebene besitzen. Insbesondere kommen hierbei Partikel in Betracht, deren mittlere laterale Ausdehnung wenigstens das 10-fache, insbesondere 20-fache von deren Dicke beträgt. Die Dicke der plättchenförmigen Partikel kann z. B. in einem Bereich von etwa 5 bis 100 nm liegen.

Insbesondere im Hinblick auf die Bereitstellung plättchenartiger Partikel sind die oben bereits erwähnten Schichtsilikate besonders interessant, weil sich deren einzelne Schichten aufweiten (interkalieren) oder völlig voneinander trennen (exfolieren) lassen. Zum Exfolieren wie auch zum Dispergieren von Partikeln aus Schichtsilikat geeignete Methoden sind z. B. in der DE 10 2004 011 019 A1 und der DE 10 2004 023 900 A1 beschrieben und können im Rahmen der vorliegenden Erfindung vorteilhaft eingesetzt werden. Insbesondere kann das Schichtsilikat bereits vor seiner Einbringung in den Thermoplasten geeignet modifiziert werden, beispielsweise durch Kationenaustausch organophil eingestellt werden. Weitere an sich bekannte Möglichkeiten sind z. B. eine Hydrophobierung (z. B. mittels Oniumverbindung), eine Kopplung mit Organosilanen oder anderweitige Oberflächenbehandlungen. Gute Ergebnisse wurden z. B. erzielt mit organisch modifizierten, nanodispergierten Schichtsilikaten, wie sie z. B. unter dem Handelsnahmen "Nanofil" kommerziell erhältlich sind (z. B. "Nanofil EXM 1485").

Das Schichtsilikat kann demnach bereits zumindest teilweise interkaliert und/oder teilweise exfoliert einem zur Herstellung der thermoplastischen Folie verwendeten Monomer oder Prepolymer zugegeben werden. In einer Ausführungsform ist z. B. vorgesehen, dass die Interkalation und Exfolierung in einem Extruder erfolgt, welchem neben einem Thermoplastmaterial das Schichtsilikat als Additiv zugegeben wird, beispielsweise in einer Menge von etwa 5 bis 10 Gew.-%.

Da sich anorganisches Material wie insbesondere die bei der Erfindung bevorzugten Schichtsilikate zumeist nur unzureichend in denjenigen Harzsystemen dispergieren (und ausrichten) lassen, die bei der Herstellung von Faserverbundbauteilen üblicherweise verwendet werden (insbesondere Duroplasten wie z. B. Epoxidharz), wird mit der gemäß der Erfindung vorgesehenen Integration einer thermoplastischen Folie in einem textilen Halbzeug vorteilhaft gewissermaßen ein "Vehikel zum Einbringen von eigenschaftsverbesserten Nanopartikeln in ein beliebiges Matrixmaterial" geschaffen. Gemäß der Erfindung, wird der Thermoplast (also das "Vehikel") bei der Injektion des Harzmaterials oder spätestens bei der Aushärtung des infiltrierten Halbzeugs von den Partikeln verdrängt (wenigstens teilweise durch das Matrixmaterial ersetzt) oder Pöst sich auf. Insbesondere bei der Herstellung von Faserverbundbauteilen im Bereich der Luft- und Raumfahrttechnik werden oftmals bestimmte Temperierungsabläufe beim Infiltrieren und Aushärten vorgesehen. Ein derartiger Temperierungsverlauf für ein Epoxidharzsystem kann z. B. bei etwa 120°C beginnen (bei der Infiltration) und bei etwa 180°C enden (während einer Aushärtungsphase). Bevorzugt ist der Thermoplast bzw. der Temperaturverlauf so gewählt, dass die Folie sich nicht bereits zu Beginn der Infiltration auflöst, sondern bevorzugt allenfalls erweicht. Damit kann ein "Wegfließen" der Thermoplastfolie durch das in das Halbzeug einfließende Harz vermieden werden. Bevorzugt setzt eine Auflösung des Thermoplasten nennenswert frühestens am Ende des Infiltrationsvorganges ein. Die Auflösung kann z. B. während einer so genannten Haltephase nach der Infiltration, jedoch vor dem vollständigen Aushärten erfolgen.

Für die Herstellung der thermoplastischen Folie kann auf an sich bekannte Methoden zurückgegriffen werden. Insbesondere kann die Folie mittels einer Extrusion hergestellt werden, wobei ein dem betreffenden Extruder zugeführtes thermoplastisches Material bevorzugt bereits mit dem Partikelmaterial (z. B. exfoliertes Schichtsilikat) versetzt sein kann. Das Partikelmaterial kann in der Folie einen Anteil von z. B. 1 bis 10 Gew.-% ausbilden (z. B. etwa 7 Gew.-%).

In einer Ausführungsform ist vorgesehen, dass die Folie bei ihrer Herstellung vor Vernetzung des Thermoplasten in wenigstens einer Richtung gestreckt wird. Damit können beispielsweise plättchenförmige Nanopartikel wie z. B. Schichtsilikatplättchen in eine bevorzugte Ausrichtung parallel zur Folienebene orientiert werden. Alternativ oder zusätzlich kann die Orientierung der plättchenförmigen Partikel auch "automatisch" bereits während der Extrusion im Rahmen der Folienherstellung erfolgen (durch das "Fließen" des Folienmaterials).

Die für das erfindungsgemäße Verfahren verwendete Folie kann z. B. eine Dicke von weniger als 100 µm besitzen. Gute Ergebnisse wurden z. B. mit Folien einer Dicke von etwa 80 µm erzielt. Es ist jedoch anzumerken, dass die Foliendicke abhängig vom konkreten Anwendungsfall hinsichtlich einer "optimalen Dicke" stark variieren kann. Wenn z. B. der Anteil von Thermoplast im Epoxidharz gering gehalten werden soll, so sollte die Folie möglichst dünn gewählt werden. Andererseits könnte eine besonders dünn gewählte Foliendicke bei vorgegebenem Foliemnaterial und vorgegebener Temperierung im Faserverbundherstellungsprozess eine zu rasche bzw. frühzeitige Auflösung der Folie bewirken, so dass in der Praxis oftmals ein Optimum der Foliendicke sich als Kompromiss ergibt. Der Zeitpunkt bzw. die Geschwindigkeit der Auflösung des Thermoplasten hängt selbstverständlich auch von dem konkret verwendeten Thermoplastmaterial ab.

In einer Ausführungsform ist vorgesehen, dass der Thermoplast ein Polymer aus der Gruppe bestehend aus Polyimid (PI), Polyetherimid (PEI), Polyethersulfon (PES), Phenoxythermoplast, Polyamid (PA), Polyethylenterephthalat (PET), Polyethylen (PE), Polyester, Polyetherester, Polyesteramid, Polymethylmethacrylat (PMMA), Polypropylen (PP), Polystyrol (PS), Polyvinylchlorid (PVC) oder deren Gemischen ist. In dieser Hinsicht, wie auch betreffend etwaige Additive, welche einem solchen Polymer oder Polymergemisch zugegeben werden, kann auf an sich bekannte Methoden zurückgegriffen werden. In einer Ausführungsform ist z. B. die Zugabe eines Phenoxythermoplasten (z. B. 1 bis 10 Gew.-% bezogen auf das Gesamtgewicht) vorgesehen. Alternativ besteht der Thermoplast im Wesentlichen aus einem Phenoxythermoplasten (ggf. mit weiteren Additiven).

In einer bevorzugten Ausführungsform handelt es sich bei dem Thermoplasten um einen in demjenigen Harzsystem lösbaren Thermoplasten, welches bei einer späteren Herstellung des Faserverbundbauteils verwendet wird (um das Halbzeug zu infiltrieren). Darunter fallen z. B. PI, PEI, PES und Phenoxythermoplaste.

Die mit dispergierten, z. B. nanodispergierten Partikeln ausgestattete Folie kann zur Bildung einer oder mehrerer Halbzeuglagen des betreffenden Halbzeugs herangezogen werden, wofür z. B. ein Stapeln von einzelnen Fasermateriallagen und wenigstens einer Folienlage zur Bildung des Halbzeugs vorgesehen sein kann. Auf diese Weise können z. B. Lagen von exfolierten Schichtsilikaten mit einer Vorzugsorientierung (parallel zu den Halbzeuglagen) in gewünschter Weise und sehr genau platziert werden. Die Fasermateriallagen können z. B. Kohlenstofffasern, Glasfasern, synthetische Kunststofffasern oder andere in der Faserverbundtechnologie gebräuchliche Fasern enthalten.

Die bei der Bildung mit einer oder mehreren Folien zusammengestapelten Fasermateriallagen können bereits mit dem betreffenden Matrixmaterial imprägniert (vorimprägniert) sein. In diesem Fall entsteht ein so genanntes "Prepreg", jedoch mit der Besonderheit, dass dieses wenigstens eine Halbzeuglage enthält, die von einer Folie eines Thermoplasten mit darin nanodispergierten Partikeln gebildet ist. Wie für Prepregs üblich, kann das Matrixmaterial nach der Anordnung der einzelnen Lagen bereits teilweise vernetzt sein, um den Zusammenhalt der einzelnen Lagen aneinander zu gewährleisten. Die Herstellung des Faserverbundbauteils erfolgt in diesem Fall durch einen "Prepregprozess", bei welchem das mit dem Matrixmaterial vorimprägnierte textile Halbzeug gegebenenfalls noch verformt und schließlich ausgehärtet wird (z. B. thermisch).

In einer anderen Ausführungsform ist vorgesehen, dass für die Bildung des textilen Halbzeugs trockene Fasermateriallagen mit wenigstens einer Folie der vorstehend erläuterten Art gestapelt werden, und das betreffende Matrixmaterial erst später injiziert wird. In einer besonders bevorzugten Ausführungsform dieser Variante erfolgt die Injektion des Matrixmaterials mit Vakuumunterstützung. Derartige Verfahren zum Infiltrieren von textilen Halbzeugen sind aus dem Stand der Technik vielfältig bekannt. Lediglich beispielhaft sei diesbezüglich auf geeignete Verfahren wie VARI oder VAP verwiesen. Bei derartigen Verfahren wird das textile Halbzeug auf eine Formoberfläche eines Werkzeugs aufgelegt, wohingegen die andere Werlczeugseite durch eine gasdichte Folie gebildet wird. Durch Erzeugung eines Vakuums im Bereich des Halbzeugs lässt sich das als Matrixmaterial verwendete Harzsystem gewissermaßen in die Textilstruktur hineinsaugen (vgl. z. B. DE 100 13 409 C1).

Die Injektion des Matrixmaterials kann derart temperiert durchgeführt werden, dass der Thermoplast hierbei erweicht und sich während der Infiltration oder bevorzugt zu Beginn der Aushärtung im Harz löst. Es soll nicht ausgeschlossen sein, dass der Thermoplast sich sogar zumindest teilweise thermisch zersetzt. Insbesondere für den Fall, dass die Prozess-parameter der Infiltration so gewählt sind, dass die thermoplastische Folie bei der Infiltration nicht schmilzt, kann zur Verbesserung des Infiltrationsflusses des Matrixmaterials eine perforierte Folie verwendet werden.

Unabhängig von der Art und Weise der Infiltration des Halbzeugs mit dem Matrixmaterial (z. B. Vakuumprozess oder Prepregprozess) ist gemäß einer besonders bevorzugten Ausführungsform vorgesehen, dass die Aushärtung derart temperiert durchgeführt wird, dass die Thermoplastfolie sich hierbei zumindest größtenteils auflöst. Je nach Art des verwendeten Thermoplasten und des zur Infiltration verwendeten Matrixmaterials (und der Temperaturführung des Prozesses) kann eine Auflösung des Thermoplasten gegebenenfalls bereits nennenswert zu Beginn des Aushärtens erfolgt sein. Dies ist vorteilhaft bei in der Faserverbundtechnologie durchaus gängigen Temperaturführungen möglich. Für Epoxidharzsysteme kann z. B. folgende, jedoch lediglich beispielhaft zu verstehende Temperaturführung vorgesehen sein: Preform aufheizen mit etwa 2°C/min bis auf etwa 100 bis 120°C, erste Haltestufe für eine Stunde (Infiltration), Heizen mit etwa 2°C/min bis etwa 180°C, zweite Haltestufe für etwa zwei Stunden.

Bei dem Matrixmaterial handelt es sich bevorzugt um ein zu einem duroplastischen Kunststoff vernetzbares Kunstharz. Gemäß einer Ausführungsform ist das Matrixmaterial ein Epoxidharzsystem.

Derartige Matrixmaterialien, die für die Herstellung von Faserverbundwerkstoffen sehr vorteilhaft sind, erlauben eine Dispergierung von Schichtsilikaten nur sehr bedingt und eine Ausrichtung exfolierter Schichtsilikatpartikel praktisch gar nicht. Dies gilt insbesondere für Einkomponentensysteme auf Epoxidharzbasis, wie sie z. B. zur Herstellung von Faserverbundbauteilen in der Luftfahrt vorrangig eingesetzt werden. Außerdem würde ein Einbringen von Schichtsilikaten in derartige Harzsysteme zu erheblichen Viskositätsanstiegen führen, welche deren Verarbeitung im Faserverbund-Herstellungsprozess behindert bzw. unmöglich macht.

Die vorstehend erläuterte Problematik, anorganische Nanopartikel, insbesondere exfolierte Schichtsilikate, in gut definierter Weise (fein dispergiert und gegebenenfalls ausgerichtet) in die Matrix eines Faserverbundbauteils zu integrieren, wird gemäß der Erfindung in eleganter Weise gelöst. So können z. B. Schichtsilikate in einem Thermoplasten dispergiert und gegebenenfalls ausgerichtet und zu einer Folie extrudiert werden, die dann mit dazugestapelten Fasermateriallagen (enthaltend unidirektionale oder multidirektionale Verstärkungsfasern) weiterverarbeitet wird, etwa in einem VAP- oder Prepregprozess. Nach Infiltration, oder spätestens bei der Aushärtung (für ein Epoxidharzsystem z. B. bei mehr als 180°C) löst sich das thermoplastische Grundmaterial der Folie auf, die Partikel können hierbei jedoch dispergiert und ausgerichtet bleiben. Die Erfindung ermöglicht somit insbesondere die Dispergierung und Ausrichtung von Schichtsilikaten in Epoxidharzen. Die Schichtsilikate können im resultierenden Faserverbundbauteil genau platziert werden (durch entsprechende Stapelfolge im Halbzeug-Lagenaufbau und entsprechende Folienausbildung). Das zur Infiltration des Halbzeugs verwendete Harzsystem muss vor der Verarbeitung nicht modifiziert werden. Insbesondere ergeben sich keine Probleme hinsichtlich der für derartige Infiltrationsprozesse erforderlich geringen Viskosität des Harzsystems. Eine bevorzugte Verwendung des erfindungsgemäßen Herstellungsverfahrens ist die Herstellung eines Strukturbauteils in der Luft- und Raumfahrttechnik oder der Fahrzeugtechnik. Eine mit der Erfindung erzielte Verbesserung von Brandeigenschaften (z. B. durch eine Barrierewirkung von dispergierten Schichtsilikaten) kann z. B. zur Schaffung neuer Materialien bei der Fertigung von Flugzeugen und Hubschraubern angewendet werden (z. B. schalenförmige Rumpfbauteile mit verbesserten Brand(schutz)eigenschaften und/oder erhöhter Impaktresistenz).

Die Erfindung wird nachfolgend anhand eines Ausführungsbeispiels mit Bezug auf die beigefügten Zeichnungen weiter beschrieben. Es stellen jeweils schematisch dar:
- **Fig**. **1**: die Dispergierung von Schichtsilikat in einem thermoplastischen Kunststoff,
- **Fig. 2**: die Herstellung einer Folie mit darin ausgerichteten Schichtsilikätpartikeln aus dem thermoplastischen Kunststoff von Fig. 1,
- **Fig. 3**: die Herstellung eines textilen Halbzeugs aus Zuschnitten der Folie von Fig. 2 und weiteren Halbzeuglagen aus Fasermaterial, und
- **Fig. 4**: ein Faserverbundbauteil, hergestellt durch Infiltration des Lagenaufbaus von Fig. 3 mit einem Epoxidharz und nachfolgender Aushärtung.

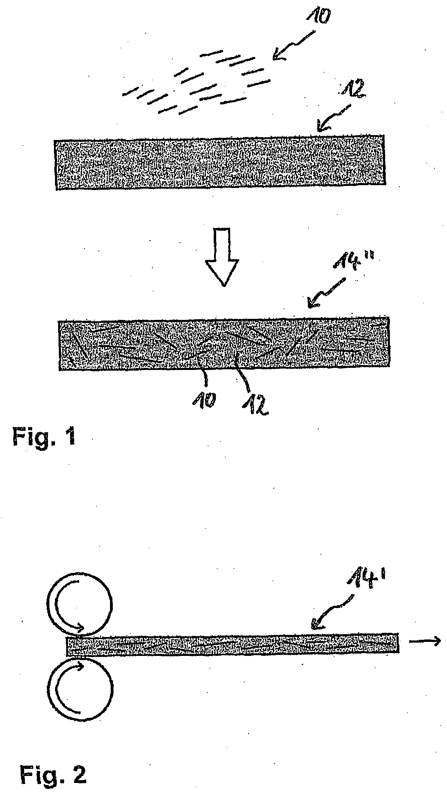

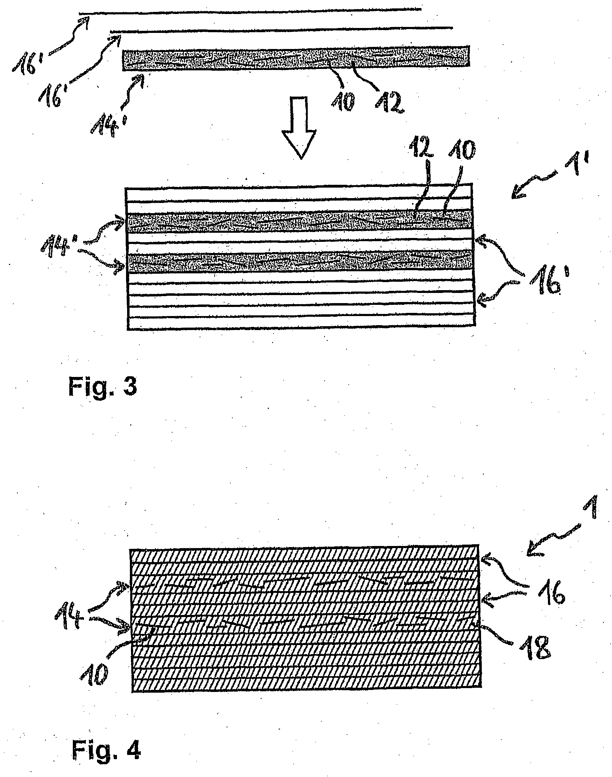

Die Fig. 1 bis 4 veranschaulichen die prinzipiellen Prozessschritte zur Herstellung eines Faserverbundbauteils 1 (Fig. 4).

Fig. 1 veranschaulicht die Einarbeitung eines Schichtsilikats 10 in ein thermoplastisches Kunststoffmaterial 12, nachfolgend auch als "Thermoplast" bezeichnet, welches z. B. von einem Phenoxy-Polymer gebildet ist. Diese Einarbeitung kann z. B. mittels eines Extruders erfolgen, dem ein Thermoplastgranulat zusammen mit dem Schichtsilikat zugeführt wird, um eine thermoplastische Kunststoffmasse 14" zu erzeugen, bei welcher Partikel des Schichtsilikats 10 im Thermoplasten 12 verteilt sind. In einer Ausführungsform erfolgt die Einarbeitung des Schichtsilikats unter Zugabe eines oder mehrerer Additive zum Bewirken oder Fördern einer wenigstens teilweisen Exfolierung des Schichtsilikats 10.

Nachfolgend (oder in demselben Extrusionsprozess) wird das Material 14" zu einer dünnen Folie 14' weiterverarbeitet. Bei diesem Schritt, gefördert durch eine Streckung der Folie 14' in eine oder zwei Richtungen, wie es in Fig. 2 veranschaulicht ist, erfolgt eine Ausrichtung der plättchenförmigen Schichtsilikatpartikel 10 derart, dass diese vorzugsweise parallel zur Folienebene orientiert werden.

Fig. 3 veranschaulicht die sodann erfolgende Bildung eines textilen Halbzeugs 1' durch Stapeln von Halbzeuglagen, die teilweise von Fasermateriallagen 16' (z. B. Kohlenstofffasern) und teilweise von flächigen Zuschnitten der Folie 14' gebildet sind. Im dargestellten Beispiel handelt es sich bei den Fasermateriallagen 16' um "trockenes Fasermaterial" (z. B. unidirektionale Fasern, multiaxiales Fasergelege, Gewebe, Faservlies etc.). Im Gegensatz dazu ist es alternativ möglich, bereits mit einem Matrixmaterial des späteren Faserverbundbauteils vorimprägniertes Fasermaterial zur Bildung des textilen Halbezugs 1' zu verwenden.

Das in Fig. 3 dargestellte textile Halbzeug 1' besitzt jedenfalls die Besonderheit, dass es wenigstens eine Halbzeuglage enthält, die von der Folie 14' des Thermoplasten 12 mit darin nanodispergierten Partikeln (hier: exfolientes Schichtsilikat 10) gebildet ist. Die eine oder die mehreren Folien 14' werden in diesem Halbzeug 1'entsprechend der gewünschten Verteilung der Nanopartikel im fertigen Faserverbundbauteil angeordnet.

Gemäß einer Weiterbildung ist vorgesehen, dass das Halbzeug mehrere Folien der beschriebenen Art enthält, diese sich jedoch hinsichtlich des thermoplastischen Grundmaterials und/oder der Art und/oder Anordnung (z. B. Konzentration, Abstand, Orientierung etc.) der Partikel 10 voneinander unterscheiden. Mit anderen Worten muss das Halbzeug nicht unbedingt Folien(zuschnitte) aus ein und derselben Folienherstellungscharge enthalten. Damit können z. B. Halbzeuge bzw. Faserverbundbauteile geschaffen werden, deren Eigenschaften über die Dicke variieren. Eine Brandschutzschicht ist im Allgemeinen z. B. in der Nähe oder an der Oberfläche des betreffenden Faserverbundbauteils sinnvoll.

Das Halbzeug 1' wird sodann in einem weiteren Schritt an sich bekannter Art weiterverarbeitet, nämlich mit dem gewünschten Matrixmaterial (hier: Epoxidharzsystem) infiltriert und nachfolgend ausgehärtet. Hierfür kommen prinzipiell alle aus der Faserverbundtechnologie an sich bekannten Verfahren (z. B. VAP, VARI etc.) in betracht. Bei der vorstehend bereits erläuterten Variante von vorimprägnierten Fasermateriallagen 16' erfolgt die Weiterverarbeitung mittels eines so genannten Prepregprozesses, beispielsweise in einem Form- und Aushärtungswerkzeug.

Fig. 4 veranschaulicht als Resultat der Injektion und Aushärtung eines Epoxidharzes 18 das fertige Faserverbundbauteil 1. Es besteht aus der gehärteten Epoxidharzmatrix 18 mit darin eingebetteten Fasern der Fasermateriallagen 16 und darin nanodispergiert und ausgerichtet eingebetteten Schichtsilikatpartikeln 10.

Das im Halbzeug 1' (Fig. 3) die Partikel 10 in den Halbzeuglagen 14' noch umgebende thermoplastische Kunststoffmaterial 12 ist in dieser Form im fertigen Bauteil 1 praktisch nicht mehr vorhanden. Es hat sich spätestens bei der thermischen Aushärtung (z. B. bei mehr als 120°C, z. B. etwa 180°C) aufgelöst. Im fertigen Bauteil 1 sind die Partikel 10 daher größtenteils von dem vollständig vernetzten Epoxidharz 18 umgeben.

Zusammenfassend ermöglicht die Erfindung insbesondere die Einarbeitung von dispergierten und orientierten Schichtsilikaten in die Epoxidharzmatrix eines Faserverbundbauteils. Der hierbei verwendete, lösbare Thermoplast dient als "Vehikel" für die Einbringung der Schichtsilikatpartikel und bringt lediglich eine in der Praxis vernachlässigbare Beeinflussung der resultierenden Faserverbundmatrix mit sich. Im Rahmen der Erfindung liegt ferner ein für das beschriebene Verfahren vorgefertigtes Halbzeug.

## Patentansprüche

1. Verfahren zur Herstellung eines Faserverbundbauteils (1), umfassend eine Injektion eines Matrixmaterials (18) in ein textiles Halbzeug (1') und eine nachfolgende Aushärtung des infiltrierten Halbzeugs (1'), **dadurch gekennzeichnet, dass** das auszuhärtende textile Halbzeug (1') durch Stapeln von Halbzeuglagen gebildet wird, wobei wenigstens eine Halbzeuglage von einer Folie (14') eines Thermoplasten (12) mit darin dispergierten Partikeln (10) gebildet wird, wobei spätestens beim Aushärten des infiltrierten Halbzeugs (1') der Thermoplast (12) wenigstens teilweise durch das Matrixmaterial (18) ersetzt wird oder zumindest größtenteils gelöst wird.

2. Verfahren nach Anspruch 1, wobei die Partikel (10) als Mikropartikel, insbesondere Nanopartikel, ausgebildet sind.

3. Verfahren nach Anspruch 1 oder 2, wobei die Partikel (10) von Schichtsilikat gebildet sind.

4. Verfahren nach einem der vorangehenden Ansprüche, wobei die Partikel (10) plättchenförmig sind und in der Folie (14') eine bevorzugte Ausrichtung parallel zur Folienebene besitzen.

5. Verfahren nach einem der vorangehenden Ansprüche, wobei die Folie (14') mittels einer Extrusion hergestellt ist.

6. Verfahren nach einem der vorangehenden Ansprüche, wobei der Thermoplast (12) ein Polymer aus der Gruppe bestehend aus Polyimid, Polyetherimid, Polyethersulfon, Phenoxythermoplast, Polyamid, Polyethylenterephthalat, Polyethylen, Polyester, Polyetherester, Polyesteramid, Polymethylmethacrylat, Polypropylen, Polystyrol, Polyvinylchlorid oder deren Gemischen ist.

7. Verfahren nach einem der vorangehenden Ansprüche, wobei die Injektion des Matrixmaterials (18) mit Vakuumunterstützung erfolgt.

8. Verfahren nach einem der vorangehenden Ansprüche, wobei ein mit dem Matrixmaterial vorimprägniertes textiles Halbzeug (1') verwendet wird.

9. Verfahren nach einem der vorangehenden Ansprüche, wobei das Matrixmaterial (18) ein Epoxidharzsystem oder ein Vinylestherharzsystem oder ein Acrylatharzsystem ist.

## Claims

1. A method for manufacturing a fibre composite component (1), comprising an injection of a matrix material (18) into a semi-finished textile product (1') and a subsequent curing of the infiltrated semi-finished product (1'), **characterised in that** the semi-finished textile product (1') to be cured is formed by stacking semi-finished product layers, wherein at least one semi-finished product layer is formed by a film (14') of a thermoplastic (12) having particles (10) dispersed therein, wherein, at the latest when curing the infiltrated semi-finished product (1'), the thermoplastic (12) is replaced at least in part by the matrix material (18) or is dissolved at least for the most part.

2. The method according to claim 1, wherein the particles (10) are formed as microparticles, in particular as nanoparticles.

3. The method according to claim 1 or 2, wherein the particles (10) are formed by layered silicate.

4. The method according to one of the preceding claims, wherein the particles (10) are platelet-shaped and in the film (14') have a preferred orientation parallel to the film plane.

5. The method according to one of the preceding claims, wherein the film (14') is produced by means of extrusion.

6. The method according to one of the preceding claims, wherein the thermoplastic (12) is a polymer from the group consisting of polyimide, polyetherimide, polyether sulphone, phenoxy thermoplastic, polyamide, polyethylene terephthalate, polyethylene, polyester, polyether ester, polyesteramide, polymethylmethacrylate, polypropylene, polystyrene, polyvinylchloride or mixtures thereof.

7. The method according to one of the preceding claims, wherein the injection of the matrix material (18) is performed with vacuum assistance.

8. The method according to one of the preceding claims, wherein a semi-finished textile product (1') preimpregnated with the matrix material is used.

9. The method according to one of the preceding claims, wherein the matrix material (18) is an expoy resin system or a vinyl ester resin system or an acrylate resin system.

## Revendications

1. Procédé destiné à la fabrication d'un élément composite (1) comportant des fibres, comprenant une injection d'une matière (18) formant matrice dans un produit textile semi-fini (1') et une solidification consécutive du produit semi-fini (1'), **caractérisé en ce qu'**on créé le produit textile semi-fini (1') destiné à se solidifier par empilage de couches de produits semi-finis, au moins une couche de produit semi-fini étant formée d'un film (14') d'un produit thermoplastique (12) avec des particules (10) dispersées à l'intérieur, au plus tard lors de la solidification du produit semi-fini (1') infiltré, le produit thermoplastique (12) étant remplacé au moins en partie par la matière formant matrice (18) ou étant dissous au moins en majeure partie.

2. Procédé selon la revendication 1, les particules (10) étant conçue en tant que microparticule, notamment de nanoparticule.

3. Procédé selon la revendication 1 ou 2, les particules (10) étant formées de silicate stratifié.

4. Procédé selon l'une quelconque des revendications précédentes, les particules (10) ayant la forme de paillettes et présentant dans le film (14') une orientation préférentielle à la parallèle du plan du film.

5. Procédé selon l'une quelconque des revendications précédentes, le film (14') étant fabriqué au moyen d'une extrusion.

6. Procédé selon l'une quelconque des revendications précédentes, la matière thermoplastique (12) étant un polymère du groupe comprenant un polyimide, un polyéther imide, un polyéther sulfone, une matière phénoxy-thermoplastique, un polyamide, un polyéthylène téréphtalate, un polyéthylène, un polyester, un polyéther ester, un polyester amide, un polyméthyle méthacrylate, un polypropylène, un polystyrène, un polychlorure de vinyle ou leurs mélanges.

7. Procédé selon l'une quelconque des revendications précédentes, l'injection de la matière formant matrice (18) s'effectuant avec assistance par dépression.

8. Procédé selon l'une quelconque des revendications précédentes, lors duquel on utilise un produit textile semi-fini (1') pré-imprégné avec la matière formant matrice.

9. Procédé selon l'une quelconque des revendications précédentes, la matière formant matrice (18) étant un système de résine époxy ou un système de résine d'ester vinylique ou un système de résine acrylate.
